# EUROPÄISCHE PATENTANMELDUNG

(11) **EP 3 466 637 A1**
(43) Veröffentlichungstag der Anmeldung: **10.04.2019**
(21) Anmeldenummer: 18196800.9
(22) Anmeldetag: 26.09.2018
(51) Int. Cl.: B29C 45/17, B29C 45/06

(54) **WERKZEUG-AUFSPANNPLATTE FÜR EINE KUNSTSTOFFVERARBEITUNGSMASCHINE, INSBESONDERE FÜR EINE SPRITZGIESSMASCHINE**

(30) Priorität: 04.10.2017 DE 102017009243
(71) Anmelder: Wittmann Battenfeld GmbH, 2542 Kottingbrunn (AT)
(72) Erfinder: Lechner, Andreas, 2563 Pottenstein (AT); Graf, Andreas, 1050 Wien (AT)
(74) Vertreter: Gosdin, Michael

(57) **Zusammenfassung**

Die Erfindung betrifft eine Werkzeug-Aufspannplatte (1) für eine Kunststoffverarbeitungsmaschine, insbesondere für eine Spritzgießmaschine, wobei die Werkzeug-Aufspannplatte (1) eine Anzahl an Durchtrittsöffnungen (2) für Holme (3) aufweist und wobei die Werkzeug-Aufspannplatte (1) eine Aufnahmefläche (4) für einen Teil eines Kunststoffverarbeitungswerkzeugs, insbesondere eines Spritzgießwerkzeugs, aufweist, wobei die Werkzeug-Aufspannplatte (1) als mindestens zweiteiliges Bauteil ausgebildet ist, wobei die Werkzeug-Aufspannplatte (1) ein Grundteil (5) aufweist, das von den Holmen (3) durchsetzt ist, an der eine Werkzeugträgerplatte (6) zur Aufnahme des einen Teils des Kunststoffverarbeitungswerkzeugs befestigt ist oder befestigt werden kann, wobei die Werkzeugträgerplatte (6) nicht von den Holmen (3) durchsetzt ist. Um den Einfluss von Verformungen der Werkzeug-Aufspannplatte infolge der Werkzeug-Schließkräfte auf die Aufspannfläche für das Werkzeug gering zu halten, sieht die Erfindung vor, dass das Grundteil (5) einen aus einer Basisfläche (7) des Grundteils (5) hervorragenden oder hervorspringenden Kontaktbereich (8) für die Anlage der Werkzeugträgerplatte (6) aufweist oder dass die Werkzeugträgerplatte (6) einen aus einer Basisfläche der Werkzeugträgerplatte (6) hervorragenden oder hervorspringenden Kontaktbereich für die Anlage des Grundteils (5) aufweist.

## Beschreibung

Die Erfindung betrifft eine Werkzeug-Aufspannplatte für eine Kunststoffverarbeitungsmaschine, insbesondere für eine Spritzgießmaschine, wobei die Werkzeug-Aufspannplatte eine Anzahl an Durchtrittsöffnungen für Holme aufweist und wobei die Werkzeug-Aufspannplatte eine Aufnahmefläche für einen Teil eines Kunststoffverarbeitungswerkzeugs, insbesondere eines Spritzgießwerkzeugs, aufweist, wobei die Werkzeug-Aufspannplatte als mindestens zweiteiliges Bauteil ausgebildet ist, wobei die Werkzeug-Aufspannplatte ein Grundteil aufweist, das von den Holmen durchsetzt ist, an der eine Werkzeugträgerplatte zur Aufnahme des einen Teils des Kunststoffverarbeitungswerkzeugs befestigt ist oder befestigt werden kann, wobei die Werkzeugträgerplatte nicht von den Holmen durchsetzt ist.

Eine gattungsgemäße Werkzeug-Aufspannplatte ist aus der DE 10 2009 035 289 A1 bekannt. Ähnliche Lösungen zeigen die DE 100 51 837 A1 und die WO 98/41380 A1**.**

Über eine gattungsgemäße Werkzeug-Aufspannplatte wird die Schließkraft des Werkzeugs übertragen, so dass die Platte gewissen Verformungen unterliegt. Dies gilt insbesondere dann, wenn der lichte Abstand zwischen den Holmen relativ groß ist und hohe Schließkräfte vorliegen. Selbst wenn die Werkzeug-Aufspannplatte sehr massiv ausgebildet ist, zumeist als entsprechende Gusskonstruktion, ergeben sich an der Aufnahmefläche für das eine Werkzeugteil Verformungen, die sich negativ beim Öffnen und Schließen des Werkzeugs bemerkbar machen. Außerdem wirkt sich eine Verformung der Auflagefläche negativ auf die Kraftaufbringung auf das Werkzeug aus. Bei einer zu starken Verformung wird die Schließkraft lediglich an den Kanten des Werkzeugs übertragen. Dies kann so weit gehen, dass die Schließkraft nachteilig nur noch auf zwei Kanten aufgebracht wird.

Der Erfindung liegt daher die **Aufgabe** zugrunde, eine Werkzeug-Aufspannplatte der eingangs genannten Art so fortzubilden, dass es möglich wird, den Einfluss von Verformungen der Werkzeug-Aufspannplatte infolge der Werkzeug-Schließkräfte auf die Aufspannfläche für das Werkzeug gering zu halten. Demgemäß soll auch bei Verformungen der Werkzeug-Aufspannplatte sichergestellt werden, dass das Werkzeug unter Schließkraft möglichst optimal zusammengehalten wird.

Die **Lösung** dieser Aufgabe durch die Erfindung ist dadurch gekennzeichnet, dass das Grundteil einen aus einer Basisfläche des Grundteils hervorragenden oder hervorspringenden Kontaktbereich für die Anlage der Werkzeugträgerplatte aufweist oder dass die Werkzeugträgerplatte einen aus einer Basisfläche der Werkzeugträgerplatte hervorragenden oder hervorspringenden Kontaktbereich für die Anlage des Grundteils aufweist.

Der Kontaktbereich kann dabei eine ebene Auflagefläche für die Werkzeugträgerplatte (bzw. für das Grundteil) bilden; möglich ist es aber auch, dass der Kontaktbereich eine nicht-ebene, profilierte Auflagefläche für die Werkzeugträgerplatte (bzw. für das Grundteil) bildet.

Der Kontaktbereich weist bevorzugt eine geschlossene, umlaufende (ringförmige) Form auf. Hierbei ist insbesondere an eine ovale oder runde Form gedacht.

Der Kontaktbereich ist bevorzugt aus dem Material des Grundteils (bzw. der Werkzeugträgerplatte) ausgeformt; demgemäß sind das Grundteil (bzw. die Werkzeugträgerplatte) und der Kontaktbereich einstückig ausgebildet. Möglich ist allerdings auch, dass der Kontaktbereich als separates Bauteil ausgebildet ist, das auf dem Grundteil (bzw. auf der Werkzeugträgerplatte) befestigt ist.

Das Grundteil besteht bevorzugt aus einem Guss-Material, während die Werkzeugträgerplatte bevorzugt eine vorzugsweise quadratische oder rechteckige Stahlplatte ist, vorzugsweise konstanter Dicke.

Die Werkzeug-Aufspannplatte ist bevorzugt die Düsenplatte einer Spritzgießmaschine.

Die Werkzeug-Aufnahmeplatte weist vorzugsweise zwei Durchtrittsöffnungen für zwei Holme auf.

Die Werkzeugträgerplatte ist bevorzugt mittels einer Schraubverbindung am Grundteil befestigt.

Die Werkzeug-Aufspannplatte ist demgemäß als zweiteiliges Element ausgebildet.

Hierdurch wird erreicht, dass die Schließkraft (insbesondere im Falle einer vertikalen 2-holmigen Spritzgießmaschine) großflächig bzw. gleichmäßig auf das Werkzeug aufgebracht werden kann. Aufgrund des Abstands der Holme, der gegebenenfalls relativ groß sein kann, verformt sich eine konventionelle Düsenplatte dergestalt, dass die Verformung auch auf die Aufspannfläche übertragen wird, so dass sich ein ungleichmäßiges Schließen bzw. Spannen des Werkzeugs ergeben würde. Durch die vorgeschlagene Lösung wird dies verhindert.

Durch die vorgeschlagene zweiteilige Ausführung der Werkzeug-Aufspannplatte ergibt sich ein Kraftfluss vom Grundteil der Werkzeug-Aufspannplatte über die Werkzeugträgerplatte in das Werkzeug.

Durch den frei gestaltbaren Kontaktbereich bzw. die frei gestaltbare Auflagefläche für die Werkzeugträgerplatte kann auch die Kraftaufbringung in das Werkzeug gezielt gesteuert werden. Aufgrund der genannten zweiteiligen Gestaltung der Werkzeug-Aufspannplatte und insbesondere der Düsenplatte kann eine höhere Verformung des Grundteils zugelassen werden, ohne dass sich diese auf die Aufspannfläche des Werkzeugs überträgt.

Durch die zweiteilige Ausführung der Werkzeug-Aufspannplatte ist es außerdem möglich, die Führung der Werkzeug-Aufspannplatte (insbesondere im Falle einer Düsenplatte) an der sich kaum verformenden Werkzeugträgerplatte zu realisieren. Durch die Realisierung der Führung an der Werkzeugträgerplatte wird die Führung beim Schließkraftaufbau nicht zusätzlich belastet. Wäre die Führung an der Gussplatte montiert, müsste diese die Biegung derselben aufnehmen können.

In der Zeichnung ist ein Ausführungsbeispiel der Erfindung dargestellt. Es zeigen:
- Fig. 1: in perspektivischer Darstellung einen Teil einer Spritzgießmaschine in vertikaler Bauweise,
- Fig. 2: in perspektivischer Darstellung die Düsenplatte der Spritzgießmaschine gemäß Figur 1,
- Fig. 3: in perspektivischer Darstellung einen Teil der Düsenplatte ohne Werkzeugträgerplatte und
- Fig. 4: in perspektivischer Darstellung die Düsenplatte der Spritzgießmaschine in einer verglichen mit Figur 2 anderen Ansicht.

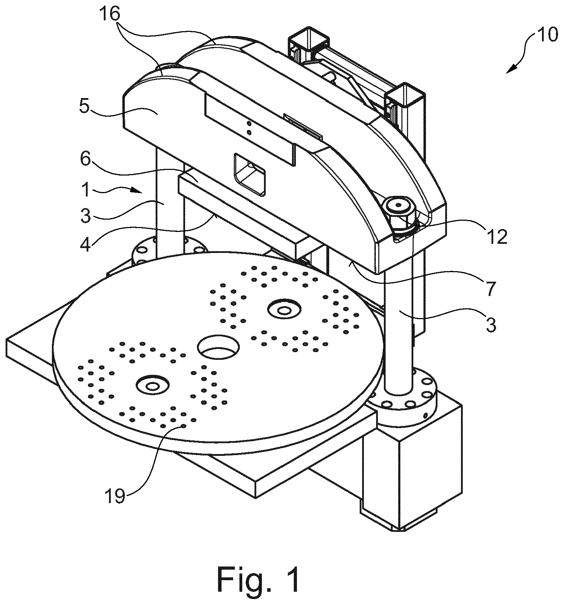

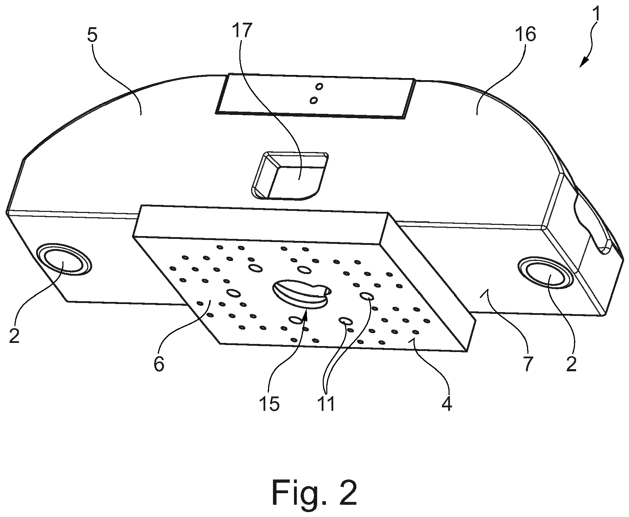

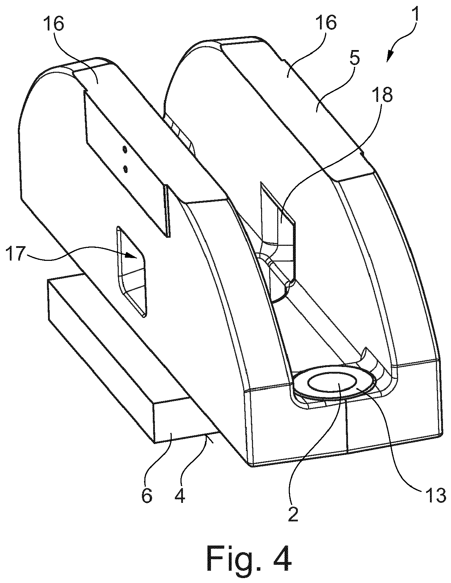

In Figur 1 ist ein Teil einer Spritzgießmaschine 10 dargestellt, wobei eine im oberen Bereich angeordnete Werkzeug-Aufspannplatte 1 in Form einer Düsenplatte zu sehen ist, die von zwei Holmen 3 durchsetzt ist, wozu die Werkzeug-Aufspannplatte 1 Durchtrittsöffnungen 2 aufweist (siehe Figur 2). Die Holme 3 sind an der Düsenplatte mittels Holmmuttern 12 befestigt. Die Holmmuttern 12 liegen dabei auf Holmmutternauflagen 13, wie sie aus Figur 4 ersichtlich sind. Zur Klarstellung sei bemerkt, dass die Werkzeug-Aufspannplatte 1, als Düsenplatte fungierend, natürlich noch neben den Durchtrittsöffnungen 2 eine weitere Öffnung für das Spritzaggregat aufweist. Im Ausführungsbeispiel gemäß Figur 1 wird die untere Werkzeugträgerplatte 19 durch einen Drehtisch gebildet, so dass zwei Spritzgießwerkzeuge im Wechsel arbeiten können.

Zur Aufnahme eines (oberen) Teils des (nicht dargestellten) Spritzgießwerkzeugs hat die Werkzeug-Aufspannplatte 1 eine Aufnahmefläche 4.

Wesentlich ist, dass die Werkzeug-Aufspannplatte 1 als zweiteiliges Bauteil ausgebildet ist. Sie hat ein Grundteil 5, welches vorliegend als Gusskonstruktion ausgeführt ist, welches von den Holmen 3 durchsetzt ist. Am Grundteil 5 ist eine Werkzeugträgerplatte 6 zur Aufnahme des einen Teils des Werkzeugs befestigt; die Werkzeugträgerplatte 6 wird dabei nicht von den Holmen 3 durchsetzt.

Details zur Ausgestaltung der Werkzeug-Aufspannplatte 1 gehen aus den Figuren 2 bis 4 hervor.

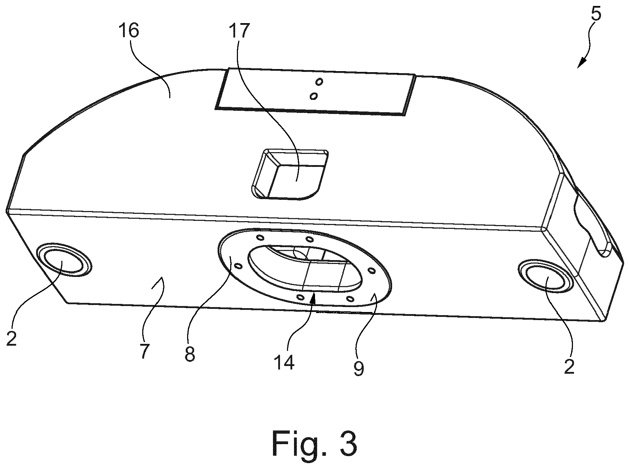

Insbesondere aus den Figuren 2 und 3 ist ersichtlich, dass an der Unterseite des Grundteils 5 eine Basisfläche angeordnet ist, auf der sich ein Kontaktbereich 8 von wenigen Millimetern Höhe (gemessen in Schließrichtung des Werkzeugs) aufbaut. Die Höhe kann beispielsweise zwischen 2 und 10 mm betragen.

Dieser Kontaktbereich 8 hat eine Auflagefläche 9, die zur Anlage der Werkzeugträgerplatte 6 dient.

Die Werkzeugträgerplatte 6 ist mittels einer Schraubverbindung 11 an das Grundteil 5 angeschraubt, wobei demgemäß die ebene Werkzeugträgerplatte 6 die Auflagefläche 9 des Kontaktbereichs 8 kontaktiert. Wie es aus Figur 3 gesehen werden kann, ist der Kontaktbereich 8 im Ausführungsbeispiel oval ausgebildet und umgibt eine Öffnung 14, die mit einer Öffnung 15 der Werkzeugträgerplatte 6 übereinstimmt. Über die Öffnungen 14, 15 kann das nicht dargestellte Spritzaggregat Kunststoffschmelze in das Werkzeug einspritzen.

Der Kontaktbereich 8 ist demgemäß ringförmig (mit runder oder ovaler Grundstruktur) gestaltet, wobei die ringförmige Struktur eine gewisse radiale Erstreckung (beispielsweise zwischen 10 und 50 mm) aufweist.

Die Holme 3 werden (im Falle der Düsenplatte) in der Durchtrittsöffnung (Holmbohrung) 2 mit einer Holmmutter 12 befestigt. Die Krafteinleitung erfolgt an der Holmmutterauflage 13 (s. hierzu Figur 4). Die Werkzeugträgerplatte 6 (Stahlplatte) kann je nach Ausführung verschiedene Bohrbilder enthalten, ohne Änderungen am Grundteil 5 (Gussplatte) vornehmen zu müssen. Die Werkzeugträgerplatte 6 wird mittels einer Schraubverbindung 11 am Grundteil 5 befestigt.

Im Grundteil 5 und in der Werkzeugträgerplatte 6 befinden sich entsprechende Öffnungen 14 bzw. 15 für das (vorzugsweise vertikal angeordnete) Spritzaggregat. Dieses wird an den Seitenwangen 16 des Grundteils 5 montiert. Durch ein (vorderes) Sichtfenster 17 ist die Zugänglichkeit zum Spritzaggregat gegeben. Durch den symmetrischen Aufbau des Grundteils 5 befindet sich an der Rückseite ebenfalls eine Öffnung 18, in welcher eine Ausspritztasse verbaut werden kann.

Das Funktionsprinzip des beschriebenen Konzepts bezieht sich gemäß dem Ausführungsbeispiel auf eine 2-holmige vertikale Spritzgießmaschine. Jedoch ist es natürlich auch möglich, andere Typen von Spritzgießmaschinen mit einer unterschiedlichen Anzahl an Holmen auf diese Weise auszuführen.

In jedem Fall wird die Biegung des Grundteils 5 von der Biegung in der Aufnahmefläche (Aufspannfläche) 4 entkoppelt, die Kraft wird zentral an das Werkzeug übertragen.

Eine andere Ausführungsform sieht anstelle des bevorzugt als Gussteil ausgeführten Grundteils 5 eine zweite Stahlplatte mit einer entsprechenden Kontaktfläche vor.

Die Auflagefläche 9 kann beliebig gestaltet werden. Es kann eine Reihe unterschiedlicher Kontaktflächen mit gleicher oder unterschiedlicher Höhe vorgesehen werden. Auch die Verwendung von mehreren kreisförmigen Kontaktflächen mit gleicher oder unterschiedlicher Höhe ist denkbar. Des weiteren ist es auch möglich, die Auflagefläche 9 zu profilieren, d. h. ein 3-D-Profil der Auflagefläche 9 zu realisieren, um beim Aufbringen der Schließkraft einen vollflächigen Kontakt zwischen den beiden Platten (Grundteil 5 und Werkzeugträgerplatte 6) zu erhalten und so die Schließkraft völlig gleichmäßig zu übertragen.

Der Kontaktbereich 8 mit seiner Auflagefläche 9 ist im Ausführungsbeispiel direkt aus dem Material (Guss) des Grundteils 5 herausgearbeitet. Der Kontaktbereich 8 kann allerdings alternativ auch über ein Adapterstück realisiert werden. Durch das Verwenden von unterschiedlichen Adapterstücken für den Kontaktbereich 8 zwischen dem Grundteil 5 und der Werkzeugträgerplatte 6 kann eine Optimierung der Krafteinleitung für unterschiedliche Werkzeuggrößen ermöglicht werden.

Das beschriebene Ausführungsbeispiel stellt also darauf ab, dass der Kontaktbereich 8 (direkt aus dem Material des Grundteils 5 geformt oder als separates Bauteil auf das Grundteil 5 aufgebracht) am Grundteil 5 angeordnet ist. Genauso ist es quasi in kinematischer Umkehr möglich, den Kontaktbereich 8 statt auf dem Grundteil 5 auf der Werkzeugaufspannplatte 6 anzuordnen. Dann liegt der Kontaktbereich 8 am Grundteil 5 auf. Diese Ausgestaltung ist im wesentlichen gleichwirkend.

Eine weitere Ausführungsform der Erfindung sieht allerdings vor, dass der Kontaktbereich 8 als Adapterelement bzw. Adapterstück ausgebildet ist, welches individuell an die Werkzeuggröße angepasst werden kann. Wenn besagte Adapterelemente als austauschbare Bauteile vorgesehen werden, ist eine Anpassung an unterschiedliche Werkzeuge leicht möglich. Demgemäß sieht eine Ausführungsform der Erfindung vor, dass ein Set mit mindestens zwei unterschiedlichen Kontaktbereichen 8 in Form von Adapterelementen vorliegt, die bedarfsweise abhängig vom zum Einsatz kommenden Werkzeug verwendet werden.

Die Kontaktbereiche 8 (insbesondere in Form von Adapterelementen) können dabei so geformt werden (s. oben), dass die Krafteinleitung in das Werkzeug gezielt verbessert werden kann. Dies kann insbesondere durch eine entsprechende Profilierung der Oberfläche des Kontaktbereichs 8 erfolgen. So kann beispielsweise durch Einsatz von Finite-Element-Berechnungen die Oberfläche des Kontaktbereichs 8 so bestimmt und anschließend profiliert werden, dass bei gegebener Verformung der einzelnen Bauteile der Maschine der Einfluss von Verformungen der Werkzeug-Aufspannplatte infolge der Werkzeug-Schließkräfte auf die Aufspannfläche für das Werkzeug gering bleiben bzw. eliminiert werden.

Durch den genannten Kontaktbereich 8 kann dann also die Biegung der Düsenplatte von der Werkzeugträgerplatte weitgehend entkoppelt und so eine gleichmäßige Kraftverteilung im Werkzeug erreicht werden.

Die Erfindung kommt besonders bevorzugt zum Einsatz, wenn lediglich zwei Holme 3 eingesetzt werden (s. Figur 1). In diesem Falle kann durch die vorgeschlagene Lösung besonders gut auf Verformungen reagiert und diese durch die genannte Ausgestaltung kompensiert werden.

### Bezugszeichenliste:

- 1: Werkzeug-Aufspannplatte
- 2: Durchtrittsöffnung
- 3: Holm
- 4: Aufnahmefläche
- 5: Grundteil
- 6: Werkzeugträgerplatte
- 7: Basisfläche
- 8: Kontaktbereich
- 9: Auflagefläche
- 10: Teil der Spritzgießmaschine
- 11: Schraubverbindung
- 12: Holmmutter
- 13: Holmmutterauflage
- 14: Öffnung
- 15: Öffnung
- 16: Seitenwange
- 17: Sichtfenster
- 18: Öffnung
- 19: Werkzeugträgerplatte

## Patentansprüche

1. Werkzeug-Aufspannplatte (1) für eine Kunststoffverarbeitungsmaschine, insbesondere für eine Spritzgießmaschine, wobei die Werkzeug-Aufspannplatte (1) eine Anzahl an Durchtrittsöffnungen (2) für Holme (3) aufweist und wobei die Werkzeug-Aufspannplatte (1) eine Aufnahmefläche (4) für einen Teil eines Kunststoffverarbeitungswerkzeugs, insbesondere eines Spritzgießwerkzeugs, aufweist, wobei die Werkzeug-Aufspannplatte (1) als mindestens zweiteiliges Bauteil ausgebildet ist, wobei die Werkzeug-Aufspannplatte (1) ein Grundteil (5) aufweist, das von den Holmen (3) durchsetzt ist, an der eine Werkzeugträgerplatte (6) zur Aufnahme des einen Teils des Kunststoffverarbeitungswerkzeugs befestigt ist oder befestigt werden kann, wobei die Werkzeugträgerplatte (6) nicht von den Holmen (3) durchsetzt ist,
**dadurch gekennzeichnet, dass**
das Grundteil (5) einen aus einer Basisfläche (7) des Grundteils (5) hervorragenden oder hervorspringenden Kontaktbereich (8) für die Anlage der Werkzeugträgerplatte (6) aufweist oder dass die Werkzeugträgerplatte (6) einen aus einer Basisfläche der Werkzeugträgerplatte (6) hervorragenden oder hervorspringenden Kontaktbereich für die Anlage des Grundteils (5) aufweist.

2. Werkzeug-Aufspannplatte nach Anspruch 1, **dadurch gekennzeichnet, dass** der Kontaktbereich (8) eine ebene Auflagefläche (9) für die Werkzeugträgerplatte (6) oder für das Grundteil (5) bildet.

3. Werkzeug-Aufspannplatte nach Anspruch 1, **dadurch gekennzeichnet, dass** der Kontaktbereich (8) eine nicht-ebene, profilierte Auflagefläche (9) für die Werkzeugträgerplatte (6) oder für das Grundteil (5) bildet.

4. Werkzeug-Aufspannplatte nach einem der Ansprüche 1 bis 3, **dadurch gekennzeichnet, dass** der Kontaktbereich (8) eine geschlossene, umlaufende Form aufweist.

5. Werkzeug-Aufspannplatte nach Anspruch 4, **dadurch gekennzeichnet, dass** der Kontaktbereich (8) eine ovale oder runde Form aufweist.

6. Werkzeug-Aufspannplatte nach einem der Ansprüche 1 bis 5, **dadurch gekennzeichnet, dass** der Kontaktbereich (8) aus dem Material des Grundteils (5) oder aus dem Material der Werkzeugträgerplatte (6) ausgeformt ist.

7. Werkzeug-Aufspannplatte nach einem der Ansprüche 1 bis 5, **dadurch gekennzeichnet, dass** der Kontaktbereich (8) als separates Bauteil ausgebildet ist, das auf dem Grundteil (5) oder auf der Werkzeugträgerplatte (6) befestigt ist.

8. Werkzeug-Aufspannplatte nach einem der Ansprüche 1 bis 7, **dadurch gekennzeichnet, dass** das Grundteil (5) aus Guss-Material besteht und dass die Werkzeugträgerplatte (6) eine vorzugsweise quadratische oder rechteckige Stahlplatte ist.

9. Werkzeug-Aufspannplatte nach einem der Ansprüche 1 bis 8, **dadurch gekennzeichnet, dass** sie die Düsenplatte einer Spritzgießmaschine ist.
